# EUROPÄISCHE PATENTANMELDUNG

(11) **EP 4 125 175 A1**
(43) Veröffentlichungstag der Anmeldung: **01.02.2023**
(21) Anmeldenummer: 21188518.1
(22) Anmeldetag: 29.07.2021
(51) Int. Cl.: H02J 4/00

(54) **ELEKTRISCHES LEISTUNGSVERTEILUNGSSYSTEM UND VERFAHREN ZUR BESTIMMUNG EINES PROFILS VON TEMPERATUR IN ABHÄNGIGKEIT VON AN ELEKTRISCHE VERBRAUCHER ZUR VERFÜGUNG GESTELLTER ELEKTRISCHER LEISTUNG**

(71) Anmelder: KID-Systeme GmbH, 21614 Buxtehude (DE)
(72) Erfinder: Zachäus, Matthias, 21614 Buxtehude (DE)
(74) Vertreter: Isarpatent

(57) **Zusammenfassung**

Ein elektrisches Leistungsverteilungssystem weist mindestens ein Stromrichtermodul (6b) mit einem Stromrichter (3), welcher dazu ausgelegt ist, elektrische Gleichspannungsleistung einstellbarer Leistungsmaximalwerte an einer Vielzahl von elektrischen Ausgangsschnittstellen (2a; ...; 2n) des Stromrichtermoduls (6b) bis zu einem Modulleistungsmaximalwert zur Verfügung zu stellen und eine Temperatursteuereinrichtung (4) mit einer Temperaturmesseinrichtung (8), wobei die Temperatursteuereinrichtung (4) vor das mindestens eine Stromrichtermodul (6b) gekoppelt und dazu ausgelegt ist, den Modulleistungsmaximalwert des mindestens einen Stromrichtermoduls (6b) in Abhängigkeit von der durch die Temperaturmesseinrichtung (8) gemessenen Temperatur des Leistungsverteilungssystems (100) anzupassen. Die Temperatursteuereinrichtung (4) ist dazu ausgelegt, ein Profil der von der Temperaturmesseinrichtung (8) gemessenen Temperaturen in Abhängigkeit der von dem Stromrichter (3) zur Verfügung gestellten Leistungsmaximalwerte zu erstellen.

## Beschreibung

### TECHNISCHES GEBIET DER ERFINDUNG

Die Erfindung betrifft ein elektrisches Leistungsverteilungssystem mit dynamisch ansteuerbaren Anschlussschnittstellen für verschiedene elektrische Verbraucher sowie ein Verfahren zur Bestimmung eines Profils von Temperatur in Abhängigkeit von an elektrische Verbraucher zur Verfügung gestellter elektrischer Leistung, insbesondere für die Anwendung in der zivilen Luft- oder Raumfahrt.

### TECHNISCHER HINTERGRUND

Persönliche elektronische Geräte ("Personal Electronic Devices", PEDs) sind heutzutage ubiquitär. Normalerweise werden diese PEDs mit dem Benutzer mitgeführt, wohin er auch reist, auch an Bord von Flugzeugen. Für den Komfort der Passagiere ist es wünschenswert, den Passagieren an Bord eines Flugzeugs die Möglichkeit zu geben, die elektrischen Energiespeicher der PEDs während ihres Aufenthalts an Bord des Flugzeugs aufzuladen oder die PEDs im Netzbetrieb zu halten. Fluggesellschaften bieten in der Regel Auflademöglichkeiten für PEDs wie Laptops, Mobiltelefone, Smartphones, Tablet-PCs und dergleichen an, bei denen USB-Anschlüsse oder Stromnetzanschlüsse für jeden Passagier einzeln an seinem jeweiligen Flugzeugsitz verwendet werden.

Für die lokale Versorgung elektrischer Verbraucher - sowohl fest installierter als auch mobiler Geräte wie PEDs - an Bord eines Flugzeugs werden lokal installierte Leistungsverteilungssysteme mit Leistungswandlern eingesetzt, an die eine Vielzahl von elektrischen Verbrauchern unterschiedlicher Leistungsanforderungen angeschlossen werden können.

Die Leistungsfähigkeit eines solchen Leistungsverteilungssystems bemisst sich hauptsächlich an der maximal und zur gleichen Zeit zur Verfügung stellbaren Leistung. Je höher diese Maximalleistung ist, desto höher sind sowohl Gewicht als auch Kosten des Leistungsverteilungssystems. Daher ist insbesondere in der Luftfahrt eine Balance zwischen Leistungsfähigkeit einerseits und Gewicht und Kosten andererseits vonnöten.

Leistungsverteilungssysteme für Sitzgruppen in Passagierflugzeugen beispielsweise sollen PEDs aller Passagiere der Sitzgruppe gleichermaßen mit elektrischer Leistung versorgen können, beispielsweise für einen Netzbetrieb und/oder ein Aufladen der Energiespeicher der PEDs. Die maximale Leistungsaufnahme im Rahmen gängiger Ladespezifikationen wie etwa USB-PD ("universal serial bus power delivery") beträgt derzeit beispielsweise bis zu 100 Watt.

Leistungswandler erwärmen sich mit zunehmender zur Verfügung gestellter Leistung. Daher werden Leistungsverteilungssysteme mitunter derart gesteuert, dass die maximal zur Verfügung gestellte elektrische Leistung in Abhängigkeit der Temperatur der Leistungswandler geregelt wird, um ein Überhitzen der Leistungswandler zu vermeiden. Um allerdings zu gewährleisten, dass die im Voraus den Passagieren bzw. elektrisch betriebenen Komponenten der Sitzgruppen (wie etwa Displays eines Bordentertainmentsystems) zugesicherte elektrischen Leistungen auch geliefert werden können, werden die Leistungswandler auch derart verbaut, dass ein Ableiten der generierten Wärme möglichst effektiv ermöglich wird, etwa durch belüftete Zwischenräume zwischen den Leistungswandlern und anderen Komponenten der Sitzgruppen. Diese Einbaumaßnahmen erfordern ein vergrößertes Installationsvolumen für die Komponenten des Leistungsverteilungssystems. In Luftfahrzeugen ist der für die zu verbauenden Komponenten verfügbare Platz jedoch stark beschränkt.

Die Druckschriften US 2013/0297089 A1, EP 2 514 062 B1, US 2004/0057177 A1, DE 10 2006 028 823 A1, DE 196 17 915 A1 und US 9,914,548 B1 offenbaren verschiedene Ansätze zur dynamischen Leistungsversorgung von elektrischen Verbrauchern, welche an ein Leistungsverteilungssystem angeschlossen sind.

### ZUSAMMENFASSUNG DER ERFINDUNG

Eine der Aufgaben der Erfindung besteht darin, verbesserte Lösungen für die Implementierung von Leistungsverteilungssystemen, insbesondere an Bord eines Passagierflugzeugs, zu finden, bei denen der für die einzelnen Komponenten benötigte Platzbedarf reduziert ist, während gleichzeitig die den Passagieren zugesicherte elektrische Leistung zur Verfügung gestellt werden kann.

Diese und andere Aufgaben werden durch ein Leistungsverteilungssystem mit den Merkmalen des Anspruchs 1 sowie durch ein Verfahren zur Bestimmung eines Profils von Temperatur in Abhängigkeit von an elektrische Verbraucher zur Verfügung gestellter elektrischer Leistung mit den Merkmalen des Anspruchs 8 gelöst.

Gemäß einem ersten Aspekt umfasst die Erfindung ein Leistungsverteilungssystem mit mindestens einem Stromrichtermodul mit einem Stromrichter, welcher dazu ausgelegt ist, elektrische Leistung einstellbarer Leistungsmaximalwerte an einer Vielzahl von elektrischen Ausgangsschnittstellen des Stromrichtermoduls bis zu einem Modulleistungsmaximalwert zur Verfügung zu stellen. Das Leistungsverteilungssystem umfasst weiterhin eine Temperatursteuereinrichtung mit einer Temperaturmesseinrichtung, wobei die Temperatursteuereinrichtung vor das mindestens eine Stromrichtermodul gekoppelt und dazu ausgelegt ist, den Modulleistungsmaximalwert des mindestens einen Stromrichtermoduls in Abhängigkeit von der durch die Temperaturmesseinrichtung gemessenen Temperatur des Leistungsverteilungssystems anzupassen. Die Temperatursteuereinrichtung ist dazu ausgelegt, ein Profil der von der Temperaturmesseinrichtung gemessenen Temperaturen in Abhängigkeit der von dem Stromrichter zur Verfügung gestellten Leistungsmaximalwerte zu erstellen.

Gemäß einem zweiten Aspekt umfasst die Erfindung ein Verfahren zur Bestimmung eines Profils von Temperatur in Abhängigkeit von an elektrische Verbraucher zur Verfügung gestellter elektrischer Leistung. Elektrische Verbraucher werden an jeweilige einer Vielzahl von elektrischen Ausgangsschnittstellen eines einen Stromrichter aufweisenden Stromrichtermoduls eines elektrischen Leistungsverteilungssystems angeschlossen. Eine Temperatur des elektrischen Leistungsverteilungssystems wird durch eine Temperaturmesseinrichtung einer Temperatursteuereinrichtung des elektrischen Leistungsverteilungssystems gemessen. Ein Profil der gemessenen Temperaturen des elektrischen Leistungsverteilungssystems in Abhängigkeit der an die elektrischen Verbraucher zur Verfügung gestellten elektrischen Leistung wird durch die Temperatursteuereinrichtung erstellt.

Gemäß einem dritten Aspekt umfasst die Erfindung ein Flugzeug, insbesondere ein Passagierflugzeug, mit mindestens einem elektrischen Leistungsverteilungssystem gemäß dem ersten Aspekt der Erfindung. In manchen Ausführungsformen kann das Flugzeug weiterhin eine elektrische Spannungsquelle, beispielsweise eine Wechselspannungsquelle, aufweisen, welche das mindestens eine elektrische Leistungsverteilungssystem mit elektrischer Spannung, beispielsweise mit Wechselspannung, speist. Die Leistungsverteilungssysteme können in einem Passagierflugzeug mit einer Vielzahl von Sitzgruppen jeweils einer der Sitzgruppen zugeordnet sein.

Eine der wesentlichen Ideen der Erfindung besteht darin, dass dynamisch bestimmt werden kann, wie viel elektrische Leistung durch das Leistungsverteilungssystem tatsächlich zur Verfügung gestellt werden kann, ohne dass das Leistungsverteilungssystem im Vorhinein definierte Temperaturbereiche verlässt.

Ein besonderer Vorteil der erfindungsgemäßen Lösung ergibt sich aus der Tatsache, dass die Komponenten des Leistungsverteilungssystems nach Gesichtspunkten der Platzeinsparung verbaut werden können und dann zu bestimmen, wie viel elektrische Leistung den Passagieren mit der gewählten Verbauungsanordnung tatsächlich realistisch zur Verfügung gestellt werden kann. Dies bietet Vorteile bei der Konstruktion gegenüber bisherigen Methoden, bei welchen die anzubietende Leistung bestimmt wurde und dann eine Verbauungsanordnung realisiert werden musste, die diese angebotene Leistung auch zur Verfügung stellen konnte.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des Leistungsverteilungssystems kann die Temperatursteuereinrichtung dazu ausgelegt sein, anhand des erstellten Profils einen Vorschlag für den Modulleistungsmaximalwert bereitzustellen. Durch die automatisierte Erstellung eines derartigen Vorschlags entfällt eine manuelle Auswertung des erstellten Temperaturprofils und die Angebote für die zur Verfügung gestellte elektrische Leistung können schnell und effizient modifiziert werden.

Gemäß einigen Ausführungsformen des Leistungsverteilungssystems kann die Temperatursteuereinrichtung dazu ausgelegt sein, den Vorschlag für den Modulleistungsmaximalwert in Form eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert bereitzustellen. Hierdurch können Angebote für zur Verfügung gestellte elektrische Leistung ohne großen Aufwand speziell an die Bedürfnisse und Wünsche der jeweiligen Verbraucher (elektrische Komponenten, Passagiergeräte) angepasst werden.

Gemäß einigen Ausführungsformen des Leistungsverteilungssystems kann die Vielzahl von elektrischen Ausgangsschnittstellen des Stromrichtermoduls USB-Schnittstellen umfassen. Das serielle Bussystem USB ("Universal Serial Bus") stellt eine Schnittstelle zwischen elektronischen Geräten bereit, die primär für einen schnellen und einfachen Datenaustausch vorgesehen ist. Verschiedene USB-Versionen wie etwa USB 1.0, 1.1, 2.0, 3.0, 3.1, 3.2 und 4.0 ist eine Stromversorgung angeschlossener Geräte über die USB-Kabelverbindungen möglich. Die USB-Spezifikation implementiert dabei auch einen Ladeanschluss ("dedicated charging port", DCP), mithilfe dessen USB-fähige elektronische Geräte, die über einen Laderegler sowie einen Akkumulator verfügen, Strom für ein Aufladen des Akkumulators von einer an den Ladeanschluss angeschlossenen elektrischen Energiequelle beziehen können. Verschiedene USB-Standards wie etwa die "Battery Charging Specification" (USB-BC) oder die "Power Delivery Specification" (USB-PD) regeln die zulässigen Höchstströme, Ladespannungen sowie Lademodalitäten. Vorteilhafterweise genügen viele PEDs hinsichtlich Netzbetrieb und Lademöglichkeiten dem USB-Standard, so dass ein Leistungsverteilungssystem mit derartigen Schnittstellen besonders gut für die Umsetzung der granulären Leistungsbedarfsplanung über stufenweise einstellbare Leistungsprofilgrenzen hinweg geeignet ist.

In manchen Ausführungsformen kann das Leistungsverteilungssystem eine Leistungsprofilverwaltungseinrichtung aufweisen, welche mit dem Stromrichter gekoppelt ist, und welche dazu ausgelegt ist, mit an jeweiligen der Vielzahl von elektrischen Ausgangsschnittstellen anschließbaren elektrischen Verbrauchern individuelle Leistungsprofile auszuhandeln, gemäß derer den Verbrauchern von dem Stromrichter über die elektrische Ausgangsschnittstelle elektrische Leistung bis zu einem ausgehandelten Leistungsmaximalwert bereitgestellt wird und welche in einem Leistungsprofilspeicher der Leistungsprofilverwaltungseinrichtung gespeichert wird. Da elektrische Verbraucher üblicherweise einen im zeitlichen Verlauf variierenden Bedarf an elektrischer Leistung haben, kann hier die zur Verfügung gestellte elektrische Leistung dynamisch an den jeweils real vorhandenen Leistungsbedarf angepasst werden.

Gemäß einigen weiteren Ausführungsformen des Leistungsverteilungssystems kann die Leistungsprofilverwaltungseinrichtung dazu konfiguriert sein, die momentane tatsächliche Leistungsaufnahme der angeschlossenen Verbraucher, mit denen bereits ein individuell ausgehandeltes Leistungsprofil besteht, zu erfassen, für jedes individuell ausgehandelte Leistungsprofil einen Leistungsreservewert des Stromrichters als Differenz zwischen dem ausgehandelten Leistungsmaximalwert und der momentanen tatsächlichen Leistungsaufnahme zu berechnen, und mit einem oder mehreren der elektrischen Verbraucher, deren Leistungsreservewert höher als ein einstellbarer Reserveschwellwert ist, ein neues Leistungsprofil mit einem niedrigeren als dem ausgehandelten Leistungsmaximalwert auszuhandeln, wenn die Summe der ausgehandelten Leistungsmaximalwerte den Modulleistungsmaximalwert überschreitet. Grundsätzlich kann jeder an das Leistungsverteilungssystem angeschlossene elektrische Verbraucher sein individuelles Leistungsprofil anfordern kann. Gleichzeitig wird aber sichergestellt, dass auch neu hinzukommende elektrische Verbraucher ein Leistungsprofil mit einem Minimum an garantierter Leistungszuteilung zugewiesen bekommen, indem nach festgelegten Regeln einzelne bereits zugewiesene Leistungsprofile neu allokiert werden. Dadurch wird eine Leistungsreserve auch für den Fall geschaffen, dass neu ausgehandelte Leistungsprofile für grundsätzlich zuzulassende neu angeschlossene elektrische Verbraucher in Summe den Maximalwert der durch das Leistungsverteilungssystem zur Verfügung stellbaren Leistung überschreiten.

Gemäß einigen Ausführungsformen des Leistungsverteilungssystems kann die Leistungsprofilverwaltungseinrichtung ferner dazu ausgelegt sein, die momentane tatsächliche Leistungsaufnahme der angeschlossenen Verbraucher über die Ermittlung gleitender Mittelwerte der Leistungsaufnahme der angeschlossenen Verbraucher zu berechnen. Gerade im Ladebetrieb entnehmen elektrische Verbraucher wie etwa PEDs dem Leistungsverteilungssystem elektrische Ladeleistung, die im zeitlichen Verlauf üblicherweise nicht oder nur wenig, und darüber hinaus nicht sprunghaft variiert. Eine Ermittlung gleitender Mittelwerte ("moving averages", MA), insbesondere unter Zuhilfenahme linear gewichteter gleitender Mittelwerte ("linear weighted moving average", LWMA), kann es ermöglichen, eine verhältnismäßig verlässliche Vorhersage der aktuellen und prognostizierten Leistungsreserveanteile zu treffen. Das Leistungsverteilungssystem kann kurzzeitig auch über der Leistungsmaximalgrenze betrieben werden, so dass eine verlässliche Vorhersage des gesamten Leistungsbedarfs es vorteilhafterweise erlaubt, allen angeschlossenen elektrischen Verbraucher eine unterbrechungsfreie Leistungsversorgung zur Verfügung zu stellen, während bei antizipierten oder tatsächlich auftretenden Leistungsengpässen der temporär mögliche Überlastbetrieb des Leistungsverteilungssystems dazu genutzt werden kann, durch das erneute Aushandeln von passenden Leistungsprofilen die Leistungsengpässe zeitnah zu beseitigen.

Gemäß einigen Ausführungsformen des Verfahrens zur Bestimmung eines Profils von Temperatur in Abhängigkeit von an elektrische Verbraucher zur Verfügung gestellter elektrischer Leistung kann ein Vorschlagen eines Modulleistungsmaximalwerts des elektrischen Leistungsverteilungssystems anhand des erstellten Profils, vorgesehen sein.

Gemäß einigen weiteren Ausführungsformen des Verfahren zur Bestimmung eines Profils von Temperatur in Abhängigkeit von an elektrische Verbraucher zur Verfügung gestellter elektrischer Leistung kann ein Vorschlag für einen ständig verfügbaren Modulleistungsmaximalwert, ein Vorschlag für einen für einen längeren Zeitraum verfügbaren Modulleistungsmaximalwert und ein Vorschlag für einen für einen kurzen Zeitraum verfügbaren Modulleistungsmaximalwert erfolgen.

Gemäß einiger Ausführungsformen des Verfahrens zur Bestimmung eines Profils von Temperatur in Abhängigkeit von an elektrische Verbraucher zur Verfügung gestellter elektrischer Leistung kann die Vielzahl von elektrischen Ausgangsschnittstellen des Stromrichtermoduls USB-Schnittstellen sein.

Gemäß einiger Ausführungsformen kann des Verfahren zur Bestimmung eines Profils von Temperatur in Abhängigkeit von an elektrische Verbraucher zur Verfügung gestellter elektrischer Leistung ein Aushandeln individueller Leistungsprofile zwischen einer Leistungsprofilverwaltungseinrichtung und den elektrischen Verbrauchern, gemäß derer den Verbrauchern von dem Stromrichter über die elektrische Ausgangsschnittstelle elektrische Leistung bis zu einem ausgehandelten Leistungsmaximalwert bereitgestellt wird, ein Erfassen einer momentanen tatsächlichen Leistungsaufnahme der angeschlossenen Verbraucher mit denen bereits ein individuell ausgehandeltes Leistungsprofil besteht, ein Vergleichen der Summe der ausgehandelten Leistungsmaximalwerte mit einem Modulleistungsmaximalwert, welcher einer maximalen elektrischen Gleichspannungsleistung entspricht, die der Stromrichter des Stromrichtermoduls an der Vielzahl von elektrischen Ausgangsschnittstellen zur Verfügung stellen kann, ein Berechnen eines Leistungsreservewerts des Stromrichters für jedes individuell ausgehandelte Leistungsprofil als Differenz zwischen dem ausgehandelten Leistungsmaximalwert und der momentanen tatsächlichen Leistungsaufnahme; und ein erneutes Aushandeln von Leistungsprofilen, welche einen niedrigeren als den zuvor ausgehandelten Leistungsmaximalwert aufweisen, zwischen der Leistungsprofilverwaltungseinrichtung und denjenigen elektrischen Verbrauchern, deren berechneter Leistungsreservewert höher als ein einstellbarer Reserveschwellwert ist, wenn die Summe der ausgehandelten Leistungsmaximalwerte den Modulleistungsmaximalwert überschreitet, umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild des Aufbaus eines Leistungsverteilungssystems gemäß einer Ausführungsform der Erfindung;
Fig. 2 ein Flussdiagramm eines Allokationsverfahrens zur Verteilung von elektrischer Leistung an elektrische Verbraucher, beispielsweise unter Nutzung eines in Fig. 1 gezeigten Leistungsverteilungssystems, gemäß einer weiteren Ausführungsform der Erfindung; und
Fig. 3 ein Flugzeug mit einem Leistungsverteilungssystem gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Persönliche elektronische Geräte ("Personal Electronic Devices", PEDs) im Sinne dieser Erfindung umfassen alle elektronischen Geräte, die zur Unterhaltung, Kommunikation und/oder für Bürozwecke eingesetzt werden können. Zum Beispiel können PEDs alle Arten von Endgeräten umfassen, wie Laptops, Mobiltelefone, Smartphones, Handheld-Geräte, Palmtops, Tablet-PCs, GPS-Geräte, Navigationsgeräte, Audiogeräte wie MP3-Player, tragbare DVD- oder Bluray^{®}-Player oder Digitalkameras.

Fahrzeugsitze im Sinne dieser Erfindung können jede Form struktureller Bestandteile eines Fahrzeugs umfassen, die dazu bestimmt sind, einen Fahrgast für die Dauer der Fahrt mit dem Fahrzeug aufzunehmen. Insbesondere können Fahrzeugsitze in Flugzeugen persönlich und zumindest vorübergehend ausschließlich vom Fluggast des Flugzeugs während des Fluges benutzt werden. Sitze bzw. Fahrzeugsitze im Sinne der Erfindung können in Sitzgruppen aufgeteilte Flugzeugsitze sein, aber auch Liegen, Sessel, Betten, Suiten der ersten Klasse bzw. Businessklasse oder ähnliche Sitzmöbel innerhalb eines Flugzeugs.

Stromrichter im Sinne der vorliegenden Erfindung sind alle Schaltungen und Einrichtungen, die zur Umwandlung einer eingespeisten elektrischen Stromart - Gleichstrom oder Wechselstrom - in die jeweils andere, oder zur Änderung charakteristischer Parameter wie der Spannung und der Frequenz einer eingespeisten elektrischen Stromart eingesetzt werden können. Stromrichter können für die Umwandlung von Wechselstrom in Gleichstrom Gleichrichter, für die Umwandlung von Gleichstrom in Wechselstrom Wechselrichter, für die Umwandlung einer Wechselstromart in eine andere Umrichter oder für die Umwandlung einer Gleichstromart in eine andere Gleichspannungswandler umfassen. Stromrichter im Sinne der vorliegenden Erfinder können mit Hilfe analoger Bauteile wie Widerständen, Induktivitäten und Kondensatoren und/oder elektronischer Bauelemente auf Basis von Halbleitern ausgeführt werden, wie beispielweise Dioden, Transistoren oder Thyristoren.

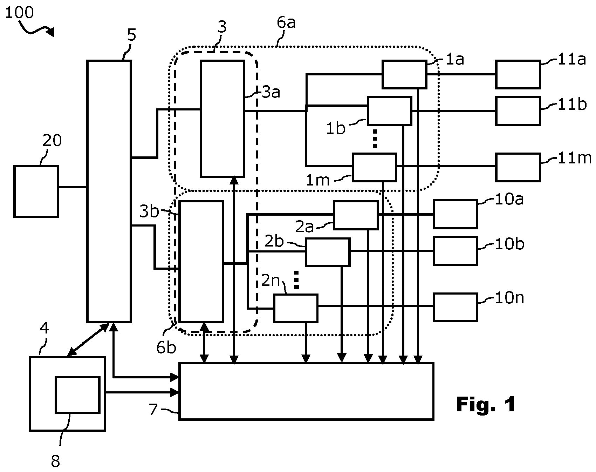

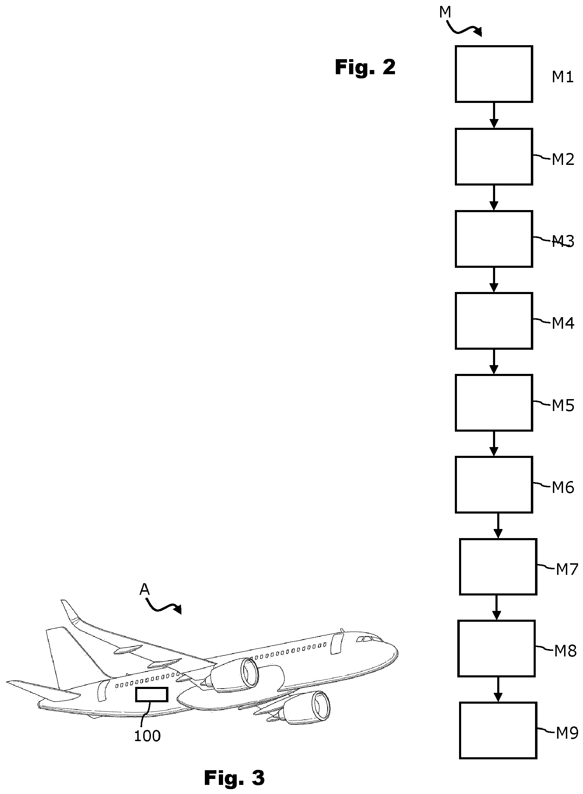

FIG. 1 zeigt ein Leistungsverteilungssystem 100 im schematischen Aufbau, welches beispielsweise einer Sitzgruppe in einem Passagierflugzeug, wie etwa dem in FIG. 3 schematisch illustrierten Flugzeug A zugeordnet werden kann. Jeder der verschiedenen Sitzgruppen in einem Passagierflugzeug kann dabei beispielsweise ein separates und lokal im Flugzeug A montiertes Leistungsverteilungssystem 100 zugeordnet werden. Mehrere der Leistungsverteilungssysteme 100 können durch ein oder mehrere Spannungsquellen 20 wie beispielhaft in FIG. 1 illustriert gespeist werden.

Die Spannungsquellen 20 können beispielsweise eine oder mehrere Wechselspannungsquellen 20, wie beispielsweise Generatoren - insbesondere Triebwerksgeneratoren oder Generatoren von Staudruckturbinen - aufweisen. Alternativ oder zusätzlich dazu können die Spannungsquellen 20 beispielsweise Gleichspannungsquellen wie etwa Photovoltaikanlagen oder Brennstoffzellen umfassen. Dazu kann das Leistungsverteilungssystem 100 eine eingangsseitige Leistungsfaktorkorrekturschaltung 5 (im Falle einer Wechselspannungsversorgung) oder einen eingangsseitigen Gleichspannungswandler 5 (im Falle einer Gleichspannungsversorgung) aufweisen, die bzw. der stromabwärts mit ein oder mehreren Stromrichtermodulen 6a, 6b gekoppelt, von denen in FIG. 1 beispielhaft zwei illustriert sind. Es sollte klar sein, dass mehr oder weniger als zwei Stromrichtermodule für ein Leistungsverteilungssystem 100 ebenfalls möglich sind.

Die Stromrichtermodule 6a, 6b umfassen jeweils einen Stromrichter 3a bzw. 3b, welcher jeweils einen Teil der von der Spannungsquelle 20 über die Leistungsfaktorkorrekturschaltung bzw. den Gleichspannungswandler 5 zur Verfügung gestellte Leistung in Gleichspannungsleistung umrichten. Die Stromrichtermodule 6a, 6b können als separate Schaltungen bzw. Komponenten ausgebildet werden; es kann aber auch möglich sein, dass die Stromrichtermodule 6a, 6b Teil eines übergeordneten Stromrichtersystems sind und daher dem gleichen Modul zugeordnet sind. Dementsprechend können die Stromrichter 3a und 3b auch funktionelle Schaltungsteile einer übergeordneten Stromrichterschaltung 3 sein.

Das Leistungsverteilungssystem 100 weist eine Temperatursteuereinrichtung 4 auf, die den Anteil der von der Spannungsquelle 20 zu entnehmenden Gesamtleistung in Abhängigkeit von den Randbedingungen in dem Leistungsverteilungssystem 100, insbesondere der vorherrschenden Temperaturen, auf eine Systemmaximalleistung beschränken kann. Die Systemmaximalleistung kann dabei diejenige Leistung sein, die die Komponenten des Leistungsverteilungssystems 100 aus Gründen der Systemauslegung oder der Systemsicherheit maximal verarbeiten können.

Die Temperatursteuereinrichtung 4 weist eine Temperaturmesseinrichtung 8 auf, mit welcher die Temperatur des Leistungsverteilungssystems 100 gemessen werden kann um daraus ein Profil der von der Temperaturmesseinrichtung 8 gemessenen Temperaturen in Abhängigkeit der von dem Stromrichter 3 zur Verfügung gestellten Leistungsmaximalwerte zu erstellen. Hierfür kann die Temperatursteuereinrichtung 4 einen Prozessor mit entsprechender Software aufweisen. Die Temperatursteuereinrichtung 4 kann anhand des erstellten Profils einen Vorschlag für den Modulleistungsmaximalwert bereitstellen. Dieser Vorschlag für den Modulleistungsmaximalwert kann beispielsweise in Form eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert gestellt werden.

Das Stromrichtermodul 6a ist in FIG. 1 beispielhaft als Stromrichtermodul dargestellt, welches über Ausgangsschnittstellen 1a bis 1m eine Anzahl von elektrischen Verbrauchern 11a bis 11m versorgt, deren Leistungsaufnahme von vorn herein festgelegt ist und deren Leistungsversorgung als essentiell angesehen wird. Beispielsweise können dies Displays eines Bordentertainmentsystems an Bord eines Passagierflugzeugs, Sitzbeleuchtungen von Passagiersitzen, Wechselspannungsanschlüsse, Sitzaktuatoren oder ähnliche Verbraucher sein. Daher ist der Anteil an der Systemgesamtleistung, die das Stromrichtermodul 6a als Modulleistungswert in elektrische Gleichspannungsleistung umsetzt und an elektrische Verbraucher 11a bis 11m weitergibt, im Wesentlichen konstant, wenn alle elektrischen Verbraucher 11a bis 11m aktiviert sind, und kann Zwischenstufen zwischen Null und dem konstanten Modulleistungswert einnehmen, wenn einige oder alle der elektrischen Verbraucher 11a bis 11m deaktiviert sind.

Elektrische Verbraucher 11a bis 11m können entweder einen aktiven oder einen inaktiven Betriebszustand aufweisen, das heißt, sie können entweder ihren Leistungsbedarf von dem Stromrichtermodul 6a abrufen oder nicht. Da die elektrischen Verbrauchern 11a bis 11m essentielle Lasten sind, genießt die Leistungsentnahme des Stromrichtermoduls 6a Priorität vor anderen elektrischen Verbrauchern.

Das Stromrichtermodul 6b umfasst einen Stromrichter 3b, welcher dazu ausgelegt ist, elektrische Spannung von einer oder mehreren Spannungsquellen 20 in elektrische Gleichspannung oder Wechselspannung umzusetzen. Der Stromrichter 3b gibt dann elektrische Leistung einstellbarer Leistungsmaximalwerte entsprechend der elektrischen Gleichspannung oder Wechselspannung an eine Vielzahl von elektrischen Ausgangsschnittstellen 2a bis 2n des Stromrichtermoduls 6b ab. Da die Leistungsmaximalwerte an den einzelnen elektrischen Ausgangsschnittstellen variieren können, kann auch der Anteil an der Systemgesamtleistung, die das Stromrichtermodul 6b in elektrische Leistung umsetzt und an ein oder mehrere elektrische Verbraucher 10a bis 10n weitergibt, variieren.

Die elektrischen Ausgangsschnittstellen 2a bis 2n können insbesondere USB-Schnittstellen sein, die gemäß der USB-Power-Delivery- und/oder der USB-Battery-Charging-Spezifikation arbeiten. Elektrische Verbraucher 10a bis 10n, die an diese USB-Schnittstellen angeschlossen werden, beispielsweise PEDs von Passagieren eines Passagierflugzeugs, können demnach mit dem Leistungsverteilungssystem 100 Leistungsprofile aushandeln. Diese Leistungsprofile geben an, bis zu welchem Leistungsmaximalwert das Leistungsverteilungssystem 100 Leistung an der jeweiligen elektrischen Ausgangsschnittstelle 2a bis 2n zur Verfügung stellt.

Das Stromrichtermodul 6b bzw. der Stromrichter 3b sind zur Bereitstellung von elektrischer Leistung bis zu einem variablen Modulleistungsmaximalwert ausgelegt. Je nachdem, wie viele elektrische Verbraucher an die elektrischen Ausgangsschnittstellen 2a bis 2n angeschlossen werden und welche Leistungsprofile ausgehandelt worden sind bzw. werden sollen, kann es vorkommen, dass die angeforderten Leistungsmaximalwerte in Summe den Modulleistungsmaximalwert überschreiten.

Das Leistungsverteilungssystem 100 kann eine Leistungsprofilverwaltungseinrichtung 7 umfassen, welche mit dem Stromrichter 3b, den elektrischen Ausgangsschnittstellen 2a bis 2n sowie mit der Temperatursteuereinrichtung 4 gekoppelt ist. Die Leistungsprofilverwaltungseinrichtung 7 dient dazu einen Überblick über den unter Umständen variablen Systemleistungsgesamtwert, den aufgrund der Variabilität des Systemleistungsgesamtwerts ebenfalls variierenden Modulleistungsmaximalwert des Stromrichters 3b, und die angeforderten Leistungsprofile von elektrischen Verbrauchern an den elektrischen Ausgangsschnittstellen 2a bis 2n zu behalten.

Beispielsweise erfasst die Leistungsprofilverwaltungseinrichtung 7 die momentane tatsächliche Leistungsaufnahme von an den Ausgangsschnittstellen 1a bis 1m des Stromrichtermoduls 6a angeschlossenen elektrischen Verbrauchern 11a bis 11m, je nach deren Aktivierungszustand. Die Summe der von den elektrischen Verbrauchern 11a bis 11m benötigten Leistung bildet den Modulleistungswert des Stromrichtermoduls 6a, welcher von dem Systemleistungsgesamtwert subtrahiert wird, um den zur Verfügung stehenden Modulleistungsmaximalwert des Stromrichtermoduls 6b zu ermitteln.

Der Modulleistungsmaximalwert des Stromrichtermoduls 6b kann daher mit der gesamten im Leistungsverteilungssystem 100 zur Verfügung stehenden Leistung einerseits und mit der momentan benötigten Leistung für die an das Stromrichtermodul 6a angeschlossenen und aktivierten essentiellen Lasten andererseits dynamisch variieren.

Die Leistungsprofilverwaltungseinrichtung 7 weist einen Prozessor auf, der mit Software ausgestattet ist, die es ermöglicht, mit an jeweiligen der Vielzahl von elektrischen Ausgangsschnittstellen 2a bis 2n anschließbaren elektrischen Verbrauchern 10a bis 10n, beispielsweise PEDs von Passagieren eines Passagierflugzeugs, individuelle Leistungsprofile auszuhandeln, gemäß derer den Verbrauchern 10a bis 10n von dem Stromrichter 3b über die entsprechend zugeordnete elektrische Ausgangsschnittstelle 2a bis 2n elektrische Leistung bis zu einem ausgehandelten Leistungsmaximalwert bereitgestellt wird. Die ausgehandelten Leistungsprofile kann der Prozessor in einem mit dem Prozessor gekoppelten Leistungsprofilspeicher der Leistungsprofilverwaltungseinrichtung 7 abspeichern.

Die Leistungsprofilverwaltungseinrichtung 7 kann dazu ausgelegt, die momentane tatsächliche Leistungsaufnahme der angeschlossenen Verbraucher 10a bis 10n an den elektrischen Ausgangsschnittstellen 2a bis 2n zu erfassen. Diese erfasste tatsächliche Leistungsaufnahme kann dann mit den entsprechenden individuell ausgehandelten Leistungsprofilen abgeglichen werden. Der Abgleich durch den Prozessor der Leistungsprofilverwaltungseinrichtung 7 bildet die Differenz zwischen dem ausgehandelten Leistungsmaximalwert und der gemessenen bzw. erfassten momentanen tatsächlichen Leistungsaufnahme, jeweils für jedes ausgehandelte Leistungsprofil individuell. Daraus ergeben sich Leistungsreservewerte des Stromrichters 3b, die einen Aufschluss darüber geben, welche der angeschlossenen elektrischen Verbraucher 10a bis 10n tatsächlich weniger Leistung benötigen als ihnen theoretisch durch den ausgehandelten Leistungsmaximalwert eigentlich zugestanden wird.

Wenn zusätzliche elektrische Verbraucher an die elektrischen Ausgangsschnittstellen 2a bis 2n angeschlossen werden, kann es vorkommen, dass ein neu auszuhandelnder Leistungsmaximalwert die Summe aller ausgehandelten Leistungsmaximalwerte auf einen Betrag hebt, der den Modulleistungsmaximalwert überschreitet. Gleichermaßen kann es vorkommen, dass aufgrund einer extern bedingten Verringerung des Modulleistungsmaximalwerts, beispielsweise aufgrund von Steuersignalen der Temperatursteuereinrichtung 4 oder aufgrund der Aktivierung von bisher inaktiven essentiellen Lasten an dem Stromrichtermodul 6a, der Modulleistungsmaximalwert unter die Summe aller gegenwärtig ausgehandelten Leistungsmaximalwerte sinkt. Herkömmlicherweise würde einem elektrischen Verbraucher unter diesen Umständen ein Leistungsabruf von dem Stromrichter 6b aus Gründen der Reserveüberschreitung unterbunden werden.

Durch die Ermittlung der Leistungsreservewerte des Stromrichters 3b ist die Leistungsprofilverwaltungseinrichtung 7 in der Lage, diejenigen elektrischen Verbraucher zu identifizieren, mit denen ein neues Leistungsprofil ausgehandelt werden kann, welches einen niedrigeren als den ursprünglich ausgehandelten Leistungsmaximalwert aufweist. Dabei kann die Leistungsprofilverwaltungseinrichtung 7 die Leistungsreservewerte mit einem einstellbaren Reserveschwellwert vergleichen, um diejenigen elektrischen Verbraucher zu ermitteln, bei denen ein neues Aushandeln von Leistungsprofilen möglich ist, ohne dass der Betrieb bzw. der Ladevorgang nennenswert beeinträchtigt werden würde. Dabei kann es vorteilhafterweise sein, dass der neu ausgehandelte Leistungsmaximalwert nach wie vor über der tatsächlichen momentanen Leistungsaufnahme liegt. Falls der elektrische Verbraucher kein derartiges Leistungsprofil akzeptiert, kann es immer eine Möglichkeit sein, ein Leistungsprofil mit einem minimalen Leistungsmaximalwert zuzuweisen. Solche Leistungsprofile sind beispielsweise in der USB-PD-Spezifikation oder der USB-BC-Spezifikation für alle kompatiblen Geräte verpflichtend zu akzeptieren.

Die Leistungsprofilverwaltungseinrichtung 7 kann dabei diejenigen angeschlossenen Verbraucher 10a bis 10n von dem erneuten Aushandeln ausnehmen, die zwar prinzipiell über ausreichend hohe Leistungsreservewerte verfügen, die aber an elektrischen Ausgangsschnittstellen 2a bis 2n angeschlossen sind, die in einer höheren Versorgungsprioritätsstufe eingeordnet sind. Beispielsweise kann es möglich sein, dass sich Nutzer durch Zahlung von zusätzlichen Gebühren oder aufgrund ihres Status als Fluggast der Businessklasse oder als Vielflieger eine Ausgangsschnittstelle höherer Versorgungsprioritätsstufe sichern können. Den PEDs solcher Nutzer wird daher über die Ausgangsschnittstelle höherer Versorgungsprioritätsstufe immer ein angefordertes Leistungsprofil mit dem gewünschten Leistungsmaximalwert zugestanden, selbst wenn die tatsächliche Leistungsaufnahme durch das angeschlossene PED unter Umständen eine Leistungsreserve ergeben würde.

Die Leistungsprofilverwaltungseinrichtung 7 kann die momentane tatsächliche Leistungsaufnahme der angeschlossenen Verbraucher 10a bis 10n über geeignete mittelnde und ausgleichende Mess- bzw. Erfassungsmethoden bestimmen, beispielweise mithilfe einer Ermittlung gleitender Mittelwerte in einem dynamisch nachzuführenden Zeitfenster einstellbarer Länge in der Vergangenheit. Dazu kann zum Beispiel ein linear gewichteter gleitender Mittelwert ("linear weighted moving average", LMWA) verwendet werden, um kurzfristig und transient auftretende Spitzen bzw. Einbrüche in der Leistungsaufnahme der angeschlossenen Verbraucher 10a bis 10n ausblenden zu können.

Umgekehrt kann es möglich sein, dass durch eine Verringerung der Anzahl angeschlossener elektrischer Verbraucher, beispielsweise durch ein Abstecken von einer Anschlussschnittstelle durch einen Nutzer eine PEDs, wieder Leistungsreserven freiwerden. Alternativ oder zusätzlich dazu kann es vorkommen, dass aufgrund einer extern bedingten Erhöhung des Modulleistungsmaximalwerts, beispielsweise aufgrund von Steuersignalen der Temperatursteuereinrichtung 4 oder aufgrund der Deaktivierung von bisher aktiven essentiellen Lasten an dem Stromrichtermodul 6a, der Modulleistungsmaximalwert wieder über die Summe aller gegenwärtig ausgehandelten Leistungsmaximalwerte steigt. Die Leistungsreserven können dann durch die Leistungsprofilverwaltungseinrichtung 7 wieder auf andere, verbleibende elektrische Verbraucher verteilt werden. Vorzugsweise können das diejenigen elektrischen Verbraucher sein, welche einen momentan ausgehandelten Leistungsmaximalwert zugewiesen bekommen haben, der unter dem ursprünglich angeforderten liegt oder der im Zuge einer Leistungsverknappung neu ausgehandelt worden ist. Die Leistungsprofilverwaltungseinrichtung 7 kann dazu periodisch oder immer dann, wenn einer der an jeweiligen der Vielzahl von elektrischen Ausgangsschnittstellen 2a bis 2n angeschlossenen elektrischen Verbrauchern 10a bis 10n von der jeweiligen Ausgangsschnittstelle abgesteckt wird, die Summe der ausgehandelten Leistungsmaximalwerte aktuell angeschlossener bzw. verbleibender elektrischer Verbraucher mit dem Modulleistungsmaximalwert des Stromrichtermoduls 6b vergleichen. Wenn die derart bestimmte Leistungsreserve einen einstellbaren Modulreservewert übersteigt, können Leistungsprofile zur Erhöhung der Leistungsmaximalwerte mit ausgewählten elektrischen Verbrauchern durchgeführt werden.

FIG. 2 zeigt ein Flussdiagramm von Verfahrensschritten eines Allokationsverfahrens M zur Verteilung von elektrischer Leistung an elektrische Verbraucher, beispielsweise von elektrischen Verbrauchern 10a bis 10n, welche an jeweilige einer Vielzahl von elektrischen Ausgangsschnittstellen 2a bis 2n - zum Beispiel USB-Schnittstellen, welcher gemäß der USB-PD-Spezifikation oder der USB-BC-Spezifikation arbeiten - eines einen Stromrichter 3b aufweisenden Stromrichtermoduls 6b eines elektrischen Leistungsverteilungssystems 100 in einem ersten Schritt M1 angeschlossen worden sind. Das Verfahren M kann insbesondere in einem elektrischen Leistungsverteilungssystem 100 wie im Zusammenhang mit FIG. 1 erläutert durchgeführt werden.

In einem folgenden Schritt M2 wird eine Temperatur des elektrischen Leistungsverteilungssystems 100 durch eine Temperaturmesseinrichtung 8 einer Temperatursteuereinrichtung 4 des elektrischen Leistungsverteilungssystems 100 gemessen. In einem folgenden Schritt M3 wird ein Profil der gemessenen Temperaturen des elektrischen Leistungsverteilungssystems 100 in Abhängigkeit der an die elektrischen Verbraucher 10a bis 10n zur Verfügung gestellten elektrischen Leistung durch die Temperatursteuereinrichtung 4 erstellt.

In einem folgenden Schritt M4 kann ein Modulleistungsmaximalwert des elektrischen Leistungsverteilungssystems 100 anhand des erstellten Profils vorgeschlagen werden. Dies kann ein Vorschlagen eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert, umfassen.

In einem folgenden Schritt M5 können individuelle Leistungsprofile zwischen einer Leistungsprofilverwaltungseinrichtung 7 und den elektrischen Verbrauchern 10a bis 10n ausgehandelt werden, gemäß derer den Verbrauchern 10a bis 10n von dem Stromrichter 3b über die elektrische Ausgangsschnittstelle 2a bis 2n elektrische Leistung bis zu einem ausgehandelten Leistungsmaximalwert bereitgestellt wird. In einem sechsten Schritt M6 erfolgt ein Erfassen einer momentanen tatsächlichen Leistungsaufnahme der angeschlossenen Verbraucher 10a bis 10n, mit denen bereits ein individuell ausgehandeltes Leistungsprofil besteht, beispielsweise über die Ermittlung gleitender Mittelwerte der gemessenen Leistungsaufnahme im Verlauf der Zeit. Die Summe der ausgehandelten Leistungsmaximalwerte wird in einem siebten Schritt M7 mit einem Modulleistungsmaximalwert, welcher einer maximalen elektrischen Leistung entspricht, die der Stromrichter 3b des Stromrichtermoduls 6b an der Vielzahl von elektrischen Ausgangsschnittstellen 2a bis 2n zur Verfügung stellen kann.

Als Leistungsreservewert des Stromrichters 3b für jedes individuell ausgehandelte Leistungsprofil kann eine Differenz zwischen dem ausgehandelten Leistungsmaximalwert und der momentanen tatsächlichen Leistungsaufnahme in einem achten Schritt M8 berechnet werden, so dass in einem neunten Schritt M9 ein erneutes Aushandeln von Leistungsprofilen, welche einen niedrigeren als den zuvor ausgehandelten Leistungsmaximalwert aufweisen, zwischen der Leistungsprofilverwaltungseinrichtung 7 und denjenigen elektrischen Verbrauchern erfolgen kann, deren berechneter Leistungsreservewert höher als ein einstellbarer Reserveschwellwert ist, immer dann, wenn die Summe der ausgehandelten Leistungsmaximalwerte den Modulleistungsmaximalwert überschreitet. Im Gegenzug kann ein erneutes Aushandeln im Schritt M9 von Leistungsprofilen mit einem höheren als dem ausgehandelten Leistungsmaximalwert immer dann durchgeführt werden, wenn einer der an jeweiligen der Vielzahl von elektrischen Ausgangsschnittstellen 2a bis 2n angeschlossenen elektrischen Verbrauchern 10a bis 10n von der Ausgangsschnittstelle abgesteckt wird.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Elektrisches Leistungsverteilungssystem (100), umfassend:
mindestens ein Stromrichtermodul (6b) mit einem Stromrichter (3b), welcher dazu ausgelegt ist, elektrische Leistung einstellbarer Leistungsmaximalwerte an einer Vielzahl von elektrischen Ausgangsschnittstellen (2a; ...; 2n) des Stromrichtermoduls (6b) bis zu einem Modulleistungsmaximalwert zur Verfügung zu stellen: und
eine Temperatursteuereinrichtung (4) mit einer Temperaturmesseinrichtung (8), wobei die Temperatursteuereinrichtung (4) vor das mindestens eine Stromrichtermodul (6b) gekoppelt und dazu ausgelegt ist, den Modulleistungsmaximalwert des mindestens einen Stromrichtermoduls (6b) in Abhängigkeit von der durch die Temperaturmesseinrichtung (8) gemessenen Temperatur des Leistungsverteilungssystems (100) anzupassen, **dadurch gekennzeichnet, dass**
die Temperatursteuereinrichtung (4) dazu ausgelegt ist, ein Profil der von der Temperaturmesseinrichtung (8) gemessenen Temperaturen in Abhängigkeit der von dem Stromrichter (3) zur Verfügung gestellten Leistungsmaximalwerte zu erstellen.

2. Leistungsverteilungssystem (100) gemäß Anspruch 1, wobei die Temperatursteuereinrichtung (4) dazu ausgelegt ist, anhand des erstellten Profils einen Vorschlag für den Modulleistungsmaximalwert bereitzustellen.

3. Leistungsverteilungssystem (100) gemäß Anspruch 2, wobei die Temperatursteuereinrichtung (4) dazu ausgelegt ist, den Vorschlag für den Modulleistungsmaximalwert in Form eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert bereitzustellen.

4. Leistungsverteilungssystem (100) gemäß einem der Ansprüche 1 bis 3, wobei die Vielzahl von elektrischen Ausgangsschnittstellen (2a; ...; 2n) des Stromrichtermoduls (6b) USB-Schnittstellen sind.

5. Leistungsverteilungssystem (100) gemäß einem der Ansprüche 1 bis 4, weiterhin umfassend eine Leistungsprofilverwaltungseinrichtung (7), welche mit dem Stromrichter (3b) gekoppelt ist, und welche dazu ausgelegt ist, mit an jeweiligen der Vielzahl von elektrischen Ausgangsschnittstellen (2a; ...; 2n) anschließbaren elektrischen Verbrauchern (10a; ...; 10n) individuelle Leistungsprofile auszuhandeln, gemäß derer den Verbrauchern (10a; ...; 10n) von dem Stromrichter (3b) über die elektrische Ausgangsschnittstelle (2a; ...; 2n) elektrische Leistung bis zu einem ausgehandelten Leistungsmaximalwert bereitgestellt wird und welche in einem Leistungsprofilspeicher (9) der Leistungsprofilverwaltungseinrichtung (7) gespeichert werden.

6. Leistungsverteilungssystem (100) gemäß Anspruch 5, wobei die Leistungsprofilverwaltungseinrichtung (7) weiterhin dazu ausgelegt ist, die momentane tatsächliche Leistungsaufnahme der angeschlossenen Verbraucher (10a; ...; 10n), mit denen bereits ein individuell ausgehandeltes Leistungsprofil besteht, zu erfassen, für jedes individuell ausgehandelte Leistungsprofil einen Leistungsreservewert des Stromrichters (3b) als Differenz zwischen dem ausgehandelten Leistungsmaximalwert und der momentanen tatsächlichen Leistungsaufnahme zu berechnen, und mit einem oder mehreren der elektrischen Verbraucher (10a; ...; 10n), deren Leistungsreservewert höher als ein einstellbarer Reserveschwellwert ist, ein neues Leistungsprofil mit einem niedrigeren als dem ausgehandelten Leistungsmaximalwert auszuhandeln, wenn die Summe der ausgehandelten Leistungsmaximalwerte den Modulleistungsmaximalwert überschreitet.

7. Leistungsverteilungssystem (100) gemäß einem der Ansprüche 5 oder 6, wobei die Leistungsprofilverwaltungseinrichtung (7) dazu ausgelegt ist, die momentane tatsächliche Leistungsaufnahme der angeschlossenen Verbraucher (10a; ...; 10n) über die Ermittlung gleitender Mittelwerte der Leistungsaufnahme der angeschlossenen Verbraucher (10a; ...; 10n) zu berechnen.

8. Verfahren (M) zur Bestimmung eines Profils von Temperatur in Abhängigkeit von an elektrische Verbraucher (10a; ...; 10n) zur Verfügung gestellter elektrischer Leistung, umfassend:
Anschließen (M1) elektrischer Verbraucher (10a; ...; 10n) an jeweilige einer Vielzahl von elektrischen Ausgangsschnittstellen (2a; ...; 2n) eines einen Stromrichter (3b) aufweisenden Stromrichtermoduls (6b) eines elektrischen Leistungsverteilungssystems (100); und
Messen (M2) einer Temperatur des elektrischen Leistungsverteilungssystems (100) durch eine Temperaturmesseinrichtung (8) einer Temperatursteuereinrichtung (4) des elektrischen Leistungsverteilungssystems (100); und
Erstellen (M3) eines Profils der gemessenen Temperaturen des elektrischen Leistungsverteilungssystems (100) in Abhängigkeit der an die elektrischen Verbraucher (10a; ...; 10n) zur Verfügung gestellten elektrischen Leistung durch die Temperatursteuereinrichtung (4).

9. Verfahren (M) gemäß Anspruch 8, weiterhin umfassend ein Vorschlagen (M4) eines Modulleistungsmaximalwerts des elektrischen Leistungsverteilungssystems (100) anhand des erstellten Profils.

10. Verfahren gemäß Anspruch 9, wobei das Vorschlagen (M4) ein Vorschlagen eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert, umfasst.

11. Verfahren (M) gemäß einem der Ansprüche 8 bis 10, wobei die Vielzahl von elektrischen Ausgangsschnittstellen (2a; ...; 2n) des Stromrichtermoduls (6b) USB-Schnittstellen sind.

12. Verfahren (M) gemäß Anspruch 9, weiterhin umfassend:
Aushandeln (M5) individueller Leistungsprofile zwischen einer Leistungsprofilverwaltungseinrichtung (7) und den elektrischen Verbrauchern (11a; ...; 11n), gemäß derer den Verbrauchern (10a; ...; 10n) von dem Stromrichter (3b) über die elektrische Ausgangsschnittstelle (2a; ...; 2n) elektrische Leistung bis zu einem ausgehandelten Leistungsmaximalwert bereitgestellt wird,
Erfassen (M6) einer momentanen tatsächlichen Leistungsaufnahme der angeschlossenen Verbraucher (10a; ...; 10n), mit denen bereits ein individuell ausgehandeltes Leistungsprofil besteht;
Vergleichen (M7) der Summe der ausgehandelten Leistungsmaximalwerte mit einem Modulleistungsmaximalwert, welcher einer maximalen elektrischen Leistung entspricht, die der Stromrichter (3b) des Stromrichtermoduls (6b) an der Vielzahl von elektrischen Ausgangsschnittstellen (2a; ...; 2n) zur Verfügung stellen kann;
Berechnen (M8) eines Leistungsreservewerts des Stromrichters (3b) für jedes individuell ausgehandelte Leistungsprofil als Differenz zwischen dem ausgehandelten Leistungsmaximalwert und der momentanen tatsächlichen Leistungsaufnahme; und
Erneutes Aushandeln (M9) von Leistungsprofilen, welche einen niedrigeren als den zuvor ausgehandelten Leistungsmaximalwert aufweisen, zwischen der Leistungsprofilverwaltungseinrichtung (7) und denjenigen elektrischen Verbrauchern, deren berechneter Leistungsreservewert höher als ein einstellbarer Reserveschwellwert ist, wenn die Summe der ausgehandelten Leistungsmaximalwerte den Modulleistungsmaximalwert überschreitet.

13. Flugzeug (A) mit mindestens einem elektrischen Leistungsverteilungssystem (100) gemäß einem der Ansprüche 1 bis 7.

14. Flugzeug (A) gemäß Anspruch 11, weiterhin mit mindestens einer elektrischen Spannungsquelle, welche das mindestens eine elektrische Leistungsverteilungssystem (100) mit elektrischer Spannung speist.

15. Flugzeug (A) gemäß Anspruch 11 oder 12, wobei das Flugzeug (A) ein Passagierflugzeug mit einer Vielzahl von Sitzgruppen ist, denen jeweils ein elektrisches Leistungsverteilungssystem (100) gemäß einem der Ansprüche 1 bis 7 zugeordnet ist.

## Geänderte Patentansprüche

### Geänderte Patentansprüche gemäss Regel 137(2) EPÜ.

1. Elektrisches Leistungsverteilungssystem (100), umfassend:
mindestens ein Stromrichtermodul (6b) mit einem Stromrichter (3b), welcher dazu ausgelegt ist, elektrische Leistung einstellbarer Leistungsmaximalwerte an einer Vielzahl von elektrischen Ausgangsschnittstellen (2a; ...; 2n) des Stromrichtermoduls (6b) bis zu einem Modulleistungsmaximalwert zur Verfügung zu stellen: und
eine Temperatursteuereinrichtung (4) mit einer Temperaturmesseinrichtung (8), wobei die Temperatursteuereinrichtung (4) vor das mindestens eine Stromrichtermodul (6b) gekoppelt und dazu ausgelegt ist, den Modulleistungsmaximalwert des mindestens einen Stromrichtermoduls (6b) in Abhängigkeit von der durch die Temperaturmesseinrichtung (8) gemessenen Temperatur des Leistungsverteilungssystems (100) anzupassen,
wobei die Temperatursteuereinrichtung (4) dazu ausgelegt ist, ein Profil der von der Temperaturmesseinrichtung (8) gemessenen Temperaturen in Abhängigkeit der von dem Stromrichter (3) zur Verfügung gestellten Leistungsmaximalwerte zu erstellen;
**gekennzeichnet durch** eine Leistungsprofilverwaltungseinrichtung (7), welche mit dem Stromrichter (3b) gekoppelt ist, und welche dazu ausgelegt ist, mit an jeweiligen der Vielzahl von elektrischen Ausgangsschnittstellen (2a; ...; 2n) anschließbaren elektrischen Verbrauchern (10a; ...; 10n) individuelle Leistungsprofile auszuhandeln, gemäß derer den Verbrauchern (10a; ...; 10n) von dem Stromrichter (3b) über die elektrische Ausgangsschnittstelle (2a; ...; 2n) elektrische Leistung bis zu einem ausgehandelten Leistungsmaximalwert bereitgestellt wird und welche in einem Leistungsprofilspeicher (9) der Leistungsprofilverwaltungseinrichtung (7) gespeichert werden.

2. Leistungsverteilungssystem (100) gemäß Anspruch 1, wobei die Temperatursteuereinrichtung (4) dazu ausgelegt ist, anhand des erstellten Profils einen Vorschlag für den Modulleistungsmaximalwert bereitzustellen.

3. Leistungsverteilungssystem (100) gemäß Anspruch 2, wobei die Temperatursteuereinrichtung (4) dazu ausgelegt ist, den Vorschlag für den Modulleistungsmaximalwert in Form eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert bereitzustellen.

4. Leistungsverteilungssystem (100) gemäß einem der Ansprüche 1 bis 3, wobei die Vielzahl von elektrischen Ausgangsschnittstellen (2a; ...; 2n) des Stromrichtermoduls (6b) USB-Schnittstellen sind.

5. Leistungsverteilungssystem (100) gemäß einem der Ansprüche 1 bis 4, wobei die Leistungsprofilverwaltungseinrichtung (7) weiterhin dazu ausgelegt ist, die momentane tatsächliche Leistungsaufnahme der angeschlossenen Verbraucher (10a; ...; 10n), mit denen bereits ein individuell ausgehandeltes Leistungsprofil besteht, zu erfassen, für jedes individuell ausgehandelte Leistungsprofil einen Leistungsreservewert des Stromrichters (3b) als Differenz zwischen dem ausgehandelten Leistungsmaximalwert und der momentanen tatsächlichen Leistungsaufnahme zu berechnen, und mit einem oder mehreren der elektrischen Verbraucher (10a; ...; 10n), deren Leistungsreservewert höher als ein einstellbarer Reserveschwellwert ist, ein neues Leistungsprofil mit einem niedrigeren als dem ausgehandelten Leistungsmaximalwert auszuhandeln, wenn die Summe der ausgehandelten Leistungsmaximalwerte den Modulleistungsmaximalwert überschreitet.

6. Leistungsverteilungssystem (100) gemäß einem der Ansprüche 1 bis 5, wobei die Leistungsprofilverwaltungseinrichtung (7) dazu ausgelegt ist, die momentane tatsächliche Leistungsaufnahme der angeschlossenen Verbraucher (10a; ...; 10n) über die Ermittlung gleitender Mittelwerte der Leistungsaufnahme der angeschlossenen Verbraucher (10a; ...; 10n) zu berechnen.

7. Verfahren (M) zur Bestimmung eines Profils von Temperatur in Abhängigkeit von an elektrische Verbraucher (10a; ...; 10n) zur Verfügung gestellter elektrischer Leistung, umfassend:
Anschließen (M1) elektrischer Verbraucher (10a; ...; 10n) an jeweilige einer Vielzahl von elektrischen Ausgangsschnittstellen (2a; ...; 2n) eines einen Stromrichter (3b) aufweisenden Stromrichtermoduls (6b) eines elektrischen Leistungsverteilungssystems (100); und
Messen (M2) einer Temperatur des elektrischen Leistungsverteilungssystems (100) durch eine Temperaturmesseinrichtung (8) einer Temperatursteuereinrichtung (4) des elektrischen Leistungsverteilungssystems (100);
Erstellen (M3) eines Profils der gemessenen Temperaturen des elektrischen Leistungsverteilungssystems (100) in Abhängigkeit der an die elektrischen Verbraucher (10a; ...; 10n) zur Verfügung gestellten elektrischen Leistung durch die Temperatursteuereinrichtung (4); und
Aushandeln (M5) individueller Leistungsprofile zwischen einer Leistungsprofilverwaltungseinrichtung (7) und den elektrischen Verbrauchern (11a; ...; 11n), gemäß derer den Verbrauchern (10a; ...; 10n) von dem Stromrichter (3b) über die elektrische Ausgangsschnittstelle (2a; ...; 2n) elektrische Leistung bis zu einem ausgehandelten Leistungsmaximalwert bereitgestellt wird,
Erfassen (M6) einer momentanen tatsächlichen Leistungsaufnahme der angeschlossenen Verbraucher (10a; ...; 10n), mit denen bereits ein individuell ausgehandeltes Leistungsprofil besteht;
Vergleichen (M7) der Summe der ausgehandelten Leistungsmaximalwerte mit einem Modulleistungsmaximalwert, welcher einer maximalen elektrischen Leistung entspricht, die der Stromrichter (3b) des Stromrichtermoduls (6b) an der Vielzahl von elektrischen Ausgangsschnittstellen (2a; ...; 2n) zur Verfügung stellen kann;
Berechnen (M8) eines Leistungsreservewerts des Stromrichters (3b) für jedes individuell ausgehandelte Leistungsprofil als Differenz zwischen dem ausgehandelten Leistungsmaximalwert und der momentanen tatsächlichen Leistungsaufnahme; und
Erneutes Aushandeln (M9) von Leistungsprofilen, welche einen niedrigeren als den zuvor ausgehandelten Leistungsmaximalwert aufweisen, zwischen der Leistungsprofilverwaltungseinrichtung (7) und denjenigen elektrischen Verbrauchern, deren berechneter Leistungsreservewert höher als ein einstellbarer Reserveschwellwert ist, wenn die Summe der ausgehandelten Leistungsmaximalwerte den Modulleistungsmaximalwert überschreitet.

8. Verfahren (M) gemäß Anspruch 7, weiterhin umfassend ein Vorschlagen (M4) eines Modulleistungsmaximalwerts des elektrischen Leistungsverteilungssystems (100) anhand des erstellten Profils.

9. Verfahren gemäß Anspruch 8, wobei das Vorschlagen (M4) ein Vorschlagen eines Vorschlags für einen ständig verfügbaren Modulleistungsmaximalwert, eines Vorschlags für einen für einen längeren Zeitraum verfügbaren Modulleistungsmaximalwert und eines Vorschlags für einen für einen kurzen Zeitraum verfügbaren Modulleistungsmaximalwert, umfasst.

10. Verfahren (M) gemäß einem der Ansprüche 7 bis 9, wobei die Vielzahl von elektrischen Ausgangsschnittstellen (2a; ...; 2n) des Stromrichtermoduls (6b) USB-Schnittstellen sind.

11. Flugzeug (A) mit mindestens einem elektrischen Leistungsverteilungssystem (100) gemäß einem der Ansprüche 1 bis 6.

12. Flugzeug (A) gemäß Anspruch 11, weiterhin mit mindestens einer elektrischen Spannungsquelle, welche das mindestens eine elektrische Leistungsverteilungssystem (100) mit elektrischer Spannung speist.

13. Flugzeug (A) gemäß Anspruch 11 oder 12, wobei das Flugzeug (A) ein Passagierflugzeug mit einer Vielzahl von Sitzgruppen ist, denen jeweils ein elektrisches Leistungsverteilungssystem (100) gemäß einem der Ansprüche 1 bis 6 zugeordnet ist.
